# EUROPEAN PATENT APPLICATION

(11) **EP 1 029 466 A1**
(43) Date of publication of application: **23.08.2000**
(21) Application number: 99309871.4
(22) Date of filing: 08.12.1999
(51) Int. Cl.: A45D 8/36, A45D 8/34, F16G 11/10

(54) **Fastenings**

(30) Priority: 09.12.1998 GB 9826962
(71) Applicant: Tidball, David, Devon EX8 1DU (GB)
(72) Inventor: Tidball, David, Devon EX8 1DU (GB)
(74) Representative: Brown, Michael Stanley

(57) **Abstract**

A fastening for use as a hairband comprises an extensible cord (10) and a manually operable holding device (11) which includes passages (16, 17) through which the cord can be passed so as to provide a loop of adjustable size within which the user's hair can be held.

## Description

### Field of the Invention

This invention relates to fastenings and has been developed with particular reference to an adjustable fastening for use as a hairband.

The hairbands currently available tend to cause damage to the hair follicles and, when being placed in position or disengaged from the hair, can cause ripping of the hair. It is accordingly an object of the present invention to provide an improved form of fastening for use as a hairband.

### Summary of the Invention

According to the present invention there is provided a fastening for use as a hairband comprising an extensible cord and a manually operable holding device which includes passages through which the cord can be passed so as to provide a loop of adjustable size within which the user's hair can be held.

The manually operable holding device preferably comprises a generally cylindrical housing having opposed openings formed in its walls, said openings being of such size that the extensible cord can be passed through the openings, and a button element mounted within the housing so as to provide a presented surface which is manually accessible, said button being biased resiliently into a position in which it exerts a gripping action on portions of the cord within the housing. The biasing means acting on the button may be a spring.

The button is preferably formed with passages through which the cord can pass.

The generally cylindrical housing and the button are preferably so shaped that the presented surface of the button element stands proud of the adjacent surface of the housing so that manual pressure can be applied to the presented surface to effect movement of the button from a position in which it exerts a gripping action on the cord into a position in which the gripping action is released.

The term "generally cylindrical" as used herein in relation to the housing is to be interpreted as including configurations which are elliptical in plan view as well as those which are circular in plan view.

The loop portion of the extensible cord may be encased within a fabric cover which is provided with eyelets or like reinforcements through which the cord projects.

The extensible cord may be in the form of a length of elastic or like resiliently extensible material contained within a braided or like cover. The free ends of the extensible cord may be connected to a pull tag which acts as an end closure for the cord.

The design of the fastening is preferably such that, when it is not in use, the user can keep it round his or her wrist so that there is no likelihood of it becoming lost.

### Brief Description of the Drawings

Figure 1 shows a first embodiment of hairband,
Figure 2 shows a second embodiment of hairband,
Figure 3 is a side view of the components of a manually operable holding device which forms part of the hairband,
Figure 4 is an end view of the components of the holding device,
Figure 5 is a plan view of the holding device, and
Figure 6 is a diagrammatical cross-sectional view of the device.

### Description of the Preferred Embodiments

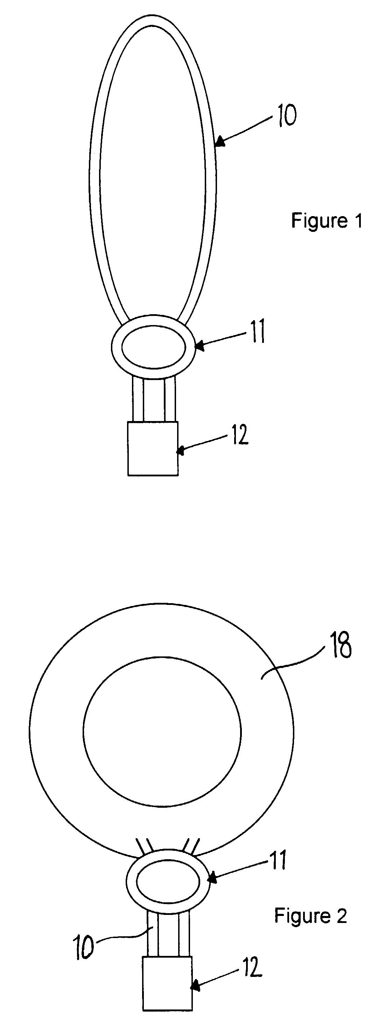

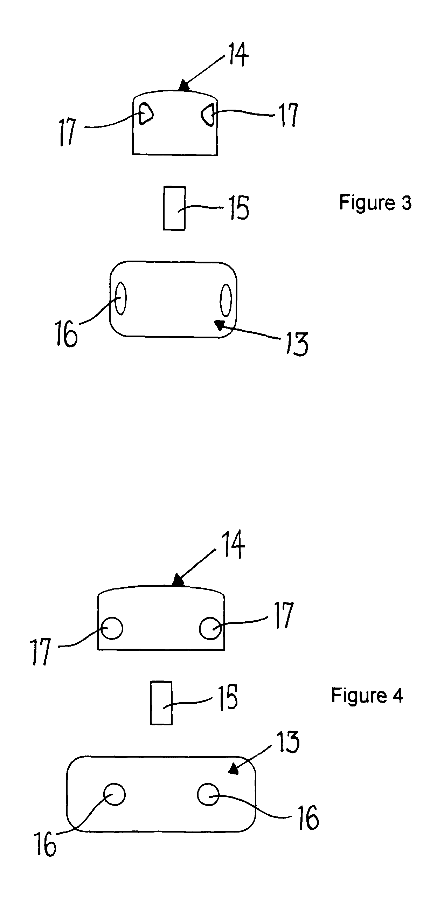

The hairband shown in Figure 1 includes an elastic cord 10, a gripping device 11 and a pull tag 12 connected to the two ends of the elastic cord 10. The gripping device 11 is shown in Figures 3, to 6 and includes an outer housing 13, a button element 14 and a spring 15.

As can be seen from the drawings, the outer housing 13 is of elliptical form in plan view and has an internal cavity of elliptical cross-section within which the button element 14 is mounted. The wall of the housing 13 is formed with two pairs of opposed openings 16 and the button element 14 is formed with two through passages 17. The cord 10 can thus be passed through the openings 16 and passages 17 to obtain the configuration shown in Figure 1.

The button element 14 is acted upon by the spring 15, which acts between the base of the cavity within the housing 13 and the adjacent surface of the button element 14, so as to urge the button element 14 outwardly of the cavity in the housing 13 and thereby subject the cord 10 to a gripping or shearing action which serves to hold the cord 10 against inadvertent movement relative to the gripping device 10.

In use, therefore, the button element 14 can be pressed manually to displace it against the resilient action of the spring 15 so as to bring the passages 17 in the button element 14 into register with the openings 16 in the housing 13. The cord 10 will then no longer be in shear, i.e. the gripping action exerted thereon will be released, and the cord 10 will be movable longitudinally relative to the gripping device 11.

The size of the loop provided by the cord 10 will thus be readily adjusted so that, in use, a resilient loop of adjustable size will be provided within which the user's hair can be retained. Before engaging the hairband with his or her hair, the user will press the button 14 and pull on the cord 10 to produce a loop of suitable size. The pressing action on the button 14 will then be released and the loop of cord 10 engaged with the user's hair. Once the loop of cord 10 is appropriately positioned, the user will once more press on the button 14 and pull the tab 12 to reduce the size of the loop of cord 10 to that which is required to grip the hair effectively, but not too tightly.

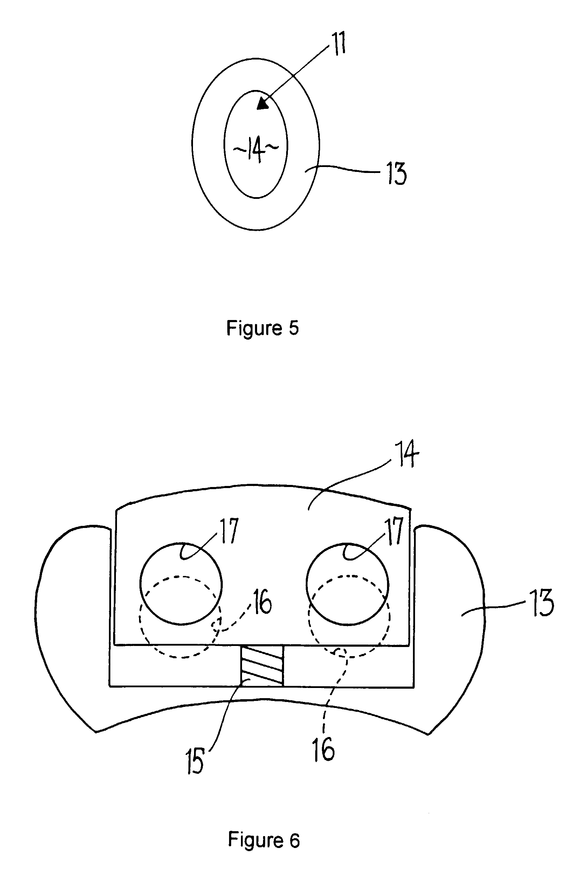

The dimensions of the button element 14 and the housing 13 are such that, when the button element 14 is placed within the cavity in the housing 13, its upwardly presented surface stands just proud of the adjacent surface of the housing 13. The underneath surface of the housing 13 is of curvate form as indicated in Figure 6 to provide a slightly dished appearance such that the user's fingers can readily identify and be guided towards the upwardly presented surface of the button element 14.

Adjustment of the size of the loop will thus readily be effected when the hairband is being engaged with or disengaged from the hair of the user, event though such operations are being carried out behind the user's head and the device 11 is accordingly not readily visible.

The cord 10 of the device shown in Figure 1 includes a length of elastic covered by braided polypropylene fabric of appropriate decorative appearance.

The device shown in Figure 2 is similar to that shown in Figure 1 but includes a fleece-like fabric sleeve 18 over the cord 11, the sleeve 18 having a sewn edge and eyelets or button-hole formations through which the cord emerges. The fabric sleeve 18 serves to reduce the likelihood of damage to the user's hair and has an enhanced aesthetic appeal.

## Claims

1. A fastening for use as a hairband comprising an extensible cord (10) and a manually operable holding device (11) which includes passages (16,17) through which the cord (10) can be passed so as to provide a loop of adjustable size within which the user's hair can be held.

2. A fastening as claimed in Claim 1, in which the manually operable holding device (11) comprises a generally cylindrical housing (13) having opposed openings (16) formed in its walls, the openings (16) being of such size that the extensible cord can be passed through the openings (16).

3. A fastening as claimed in Claim 2, and in which a button element (14) is mounted within the housing (13) so as to provide a presented surface which is manually accessible.

4. A fastening as claimed in Claim 3, in which the button (14) is biased resiliently into a position in which it exerts a gripping action on portions of the cord (10) within the housing.

5. A fastening as claimed in Claim 4, in which the biasing means acting on the button (14) is a spring (15).

6. A fastening as claimed in Claim 5, in which the generally cylindrical housing (13) and the button (14) are so shaped that the presented surface of the button (14) stands proud of the adjacent surface of the housing (13) so that manual pressure can be applied to the button (14) to effect movement of the button (14) from a position in which it exerts a gripping action on the cord (10) into a position in which the gripping action is released.

7. A fastening as claimed in any one of the preceding claims, in which the loop portion of the extensible cord (10) is encased within a fabric cover (18).

8. A fastening as claimed in Claim 7, in which the fabric cover (18) is provided with eyelets or like reinforcements through which the cord (10) projects.
